# DEMANDE DE BREVET EUROPEEN

(11) **EP 4 197 840 A1**
(43) Date de publication de la demande: **21.06.2023**
(21) Numéro de dépôt: 22214166.5
(22) Date de dépôt: 16.12.2022
(51) Int. Cl.: B60K 35/00, B60K 37/06

(54) **PIÈCE DE VÉHICULE AVEC INTERFACE UTILISATEUR**

(30) Priorité: 17.12.2021 FR 2113813
(71) Demandeur: Compagnie Plastic Omnium SE, 69007 Lyon (FR)
(72) Inventeur: KHAYAT, Issam, 01150 SAINTE-JULIE (FR)
(74) Mandataire: LLR

(57) **Abrégé**

Cette pièce de véhicule (2) comprend :
- une source de lumière (8) apte à émettre une image lumineuse,
- une plaque à micro-miroirs (12) apte à projeter l'image lumineuse en dehors de la pièce de véhicule (2) sous la forme d'un hologramme (4),
- un filtre de confidentialité (15) situé entre la source de lumière (8) et l'hologramme (4), et
- un capteur (16) apte à détecter la présence de tout objet dans un plan de projection (17) coïncidant au moins partiellement avec l'hologramme (4).

## Description

L'invention concerne une pièce de véhicule automobile. Plus particulièrement, l'invention concerne une pièce de véhicule automobile présentant une interface utilisateur.

On connaît déjà dans l'état la technique des véhicules automobiles présentant une interface homme/machine, communément désignée IHM ou HMI pour les termes anglo-saxons « Human Machine Interface » permettant au véhicule de communiquer avec une personne et/ou permettant à un utilisateur de communiquer avec le véhicule. Dans le premier cas, il peut s'agir d'informations visuelles présentées par le véhicule à l'attention de l'utilisateur du véhicule. Dans le second cas, il peut s'agir d'instructions données par l'utilisateur au véhicule, par exemple pour valider une action à réaliser sur le véhicule. La communication peut se dérouler dans les deux sens, comme par exemple dans le cas où l'utilisateur donne pour instructions au véhicule d'ouvrir une porte et que le véhicule demande à l'utilisateur de rentrer un code prédéterminé avant d'exécuter la tâche demandée.

Une telle interface peut se présenter sous la forme d'un écran tactile ménagé sur la carrosserie du véhicule couplé avec une unité de commande électronique ou UCE. Les informations données par le véhicule sont affichées sur l'écran, et l'utilisateur peut appuyer sur l'écran pour donner des instructions, par exemple en appuyant sur un clavier tactile ou en faisant lire son empreinte digitale.

Cette interface est intéressante mais pose certains problèmes. En effet, la carrosserie du véhicule est exposée à l'environnement extérieur, ce qui fait qu'elle peut être sale, auquel cas il est préférable de ne pas toucher l'écran tactile pour des raisons d'hygiène. Inversement, toucher un écran tactile avec ses doigts laisse généralement une trace de gras dessus, ce qui nuit à l'aspect de l'écran tactile et donc du véhicule. De plus, un écran tactile fonctionne généralement mal lorsque les doigts de l'utilisateur sont mouillés, si bien que l'écran tactile peut être inopérant en cas de pluie.

Afin de remédier à ces problèmes, il est connu de la demande FR1910401A1, déposée au nom de la déposante, d'utiliser une plaque à micro-miroirs, permettant de projeter une image lumineuse générée par une source de lumière sous la forme d'un hologramme, couplée avec un capteur permettant à un utilisateur d'interagir avec l'hologramme. Cela permet à l'utilisateur d'éviter de toucher la surface extérieure du véhicule, de sorte que les inconvénients du dispositif de l'art antérieur décrit ci-dessus ne se présentent pas. Toutefois, la projection de l'hologramme par la plaque à micro-miroirs fait également apparaitre des parasites lumineux de part et d'autre de l'hologramme. Cela peut troubler l'utilisateur dans son interaction avec l'hologramme et crée en tout état de cause un effet esthétique indésirable qu'il est préférable d'éviter.

L'invention a notamment pour but de remédier à ces problèmes en améliorant l'interface utilisateur de l'art antérieur afin de la rendre plus claire à utiliser tout en améliorant son aspect esthétique.

À cet effet, on prévoit selon l'invention une pièce de véhicule qui comprend :
- une source de lumière apte à émettre une image lumineuse,
- une plaque à micro-miroirs apte à projeter l'image lumineuse en dehors de la pièce de véhicule sous la forme d'un hologramme,
- au moins un filtre de confidentialité situé entre la source de lumière et l'hologramme, et
- un capteur apte à détecter la présence de tout objet dans un plan de projection coïncidant au moins partiellement avec l'hologramme.

La présence d'un filtre de confidentialité sur la trajectoire du faisceau lumineux émis par la source de lumière permet, de manière inattendue, d'empêcher la pollution lumineuse formée par des artéfacts de l'hologramme se trouvant en périphérie de l'hologramme principal, de sorte que le filtre élimine les parasites lumineux mentionnés dans ce qui précède, ou à tout le moins atténue leur visibilité. Il s'ensuit que l'utilisateur peut plus facilement distinguer les parties de l'hologramme avec lesquelles il peut interagir, par exemple s'il se trouve sous la forme d'un clavier.

Par ailleurs, la présence du filtre de confidentialité permet de masquer l'hologramme pour les personnes ne se trouvant pas directement en face la pièce de véhicule ou pour lesquelles leur regard présente un angle supérieur ou égal à une valeur prédéterminée par rapport à un axe principal d'émission de la lumière par la source de lumière. On apporte ainsi de la confidentialité à l'utilisateur en ce que les personnes à ses côtés, ou plus généralement les personnes qui peuvent voir le véhicule autres que l'utilisateur se trouvant directement en face de l'hologramme, ne peuvent pas discerner la manière dont il interagit avec l'hologramme. Cela peut s'avérer utile dans le cas où l'hologramme est utilisé par exemple pour saisir un code confidentiel pour le déverrouillage du véhicule.

Avantageusement, la plaque à micro-miroirs est recouverte par une peau transparente à la lumière visible et à l'infrarouge.

On apporte ainsi une étanchéité à la plaque à micro-miroirs, ce qui permet de la protéger de l'humidité et de la poussière. En outre, on dissimule les éléments se trouvant derrière la peau, ce qui permet d'améliorer l'esthétique générale du véhicule.

De préférence, la peau est réalisée en polycarbonate (PC), en polypropylène (PP) ou en polyméthacrylate de méthyle (PMMA). Il est également possible de réaliser la peau dans les matériaux suivants : acrylonitrile butadiène styrène (ABS), acrylonitrile styrène acrylate (ASA), styrène acrylonitrile (SAN), mélange d'acrylonitrile styrène acrylate et de polycarbonate, mélange de polycarbonate et de polytéréphtalate d'Ethylène, polyoléfine amorphe tel que cyclo-oléfines copolymères (COC) ou cyclo-oléfines-polymères (COP).

La peau peut ainsi être fabriquée par moulage, et ce de manière peu onéreuse.

Avantageusement, le capteur est formé par un capteur infrarouge.

Le capteur est ainsi simple à réaliser.

Avantageusement, la pièce de véhicule forme un hayon, une porte, un pied avant, milieu ou arrière, un capot, un rétroviseur extérieur ou un pare-choc de véhicule.

Ces types de pièces de véhicules correspondent à des zones du véhicule qui se prêtent bien à communication d'informations ou à la réception d'instructions.

Selon un premier mode de réalisation de l'invention, la source de lumière comprend un écran lumineux.

Avantageusement, l'au moins un filtre de confidentialité est coloré et/ou métallisé.

Le filtre de confidentialité, qui peut être vu à travers la pièce de véhicule selon sa configuration, participe ainsi à l'esthétique du véhicule.

Avantageusement, la pièce de véhicule comprend plusieurs filtres de confidentialité.

Selon un premier mode de réalisation de l'invention, l'au moins un filtre de confidentialité est situé en regard de la plaque à micro-miroirs, étant entendu que l'au moins un filtre de confidentialité est situé du côté réfléchissant de la plaque à micro-miroirs, à distance de la plaque à micro-miroirs ou en contact avec la plaque à micro-miroirs.

Selon un second mode de réalisation de l'invention, l'au moins un filtre de confidentialité est situé en regard de la source de lumière, à distance de la source de lumière ou en contact avec la source de lumière.

On peut aussi prévoir de combiner les premier et second modes de réalisation de l'invention.

Le filtre de confidentialité peut ainsi être disposé à plusieurs emplacements dans la pièce de véhicule, ce qui contribue à rendre l'invention adaptable à différentes contraintes d'encombrement dans la pièce de véhicule et à la nature de cette dernière. On peut d'ailleurs prévoir que la pièce de véhicule comprenne plusieurs filtres de confidentialité parmi les emplacements présentés ci-dessus, en combinant ou non les premier et second modes de réalisation. Par exemple, de tels filtres peuvent être positionnés de sorte qu'ils présentent chacun des directions de filtrage différentes, filtrant ainsi les pollutions lumineuses formées par des artéfacts de l'hologramme dans chacune de ces directions.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'une pièce de véhicule selon l'invention,
[Fig. 2] la figure 2 est une vue en section d'une pièce de véhicule selon un premier mode de réalisation de l'invention, à l'état désactivé,
[Fig. 3] la figure 3 est une vue en section de la pièce de véhicule de la figure 2, à l'état activé, et
[Fig. 4] la figure 4 est une vue en section d'une pièce de véhicule, similaire à la vue de la figure 3, selon un second mode de réalisation de l'invention.

### Description détaillée

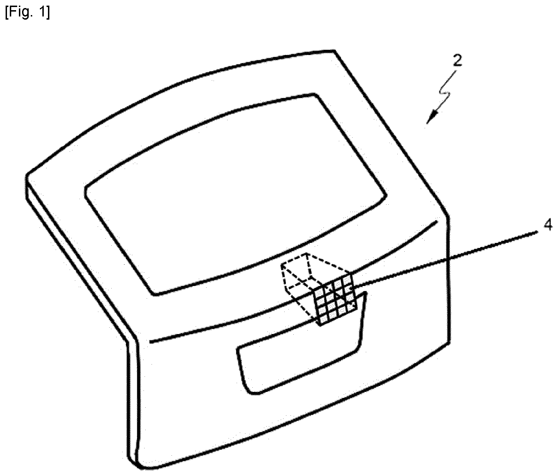

On a représenté en figure 1 une pièce de véhicule 2 selon l'invention. Dans le cas présent, la pièce de véhicule 2 forme un hayon de véhicule automobile, mais on peut prévoir qu'il s'agisse d'une toute autre partie d'un véhicule, comme une porte, un pied avant, milieu ou arrière, un capot, un rétroviseur extérieur ou un pare-choc pour ne citer que quelques exemples. Comme cela est visible, un hologramme 4 est affiché est visible de toute personne se trouvant en face de la pièce de véhicule 2.

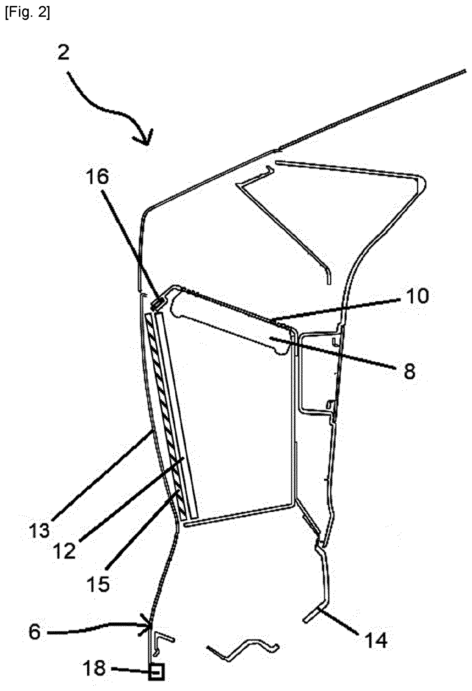

La pièce de véhicule 2 est représentée plus en détails sur la figure 2. La pièce de véhicule 2 comprend un élément de carrosserie 6 correspondant à la fonction première de la pièce de véhicule 2. Dans le cas présent, il s'agit d'un hayon qu'on ne décrira pas davantage dans ce qui suit.

La pièce de véhicule 2 comprend une source de lumière 8 apte à émettre une image lumineuse. Cette source de lumière 8 est ici formée par un écran lumineux, de forme générale plate, porté par un support 10 fixé à l'élément de carrosserie 6. La source de lumière 8 est couplée avec une unité de commande électronique ou UCE 11 qui permet à l'écran lumineux d'émettre une image lumineuse.

La pièce de véhicule 2 comprend une plaque à micro-miroirs 12 apte à projeter l'image lumineuse, générée par la source de lumière 8, en dehors de la pièce de véhicule 2. La plaque à micro-miroirs 12 est couplée à l'UCE 11. Un exemple de plaque à micro-miroirs 12 est commercialisé par la société Asukanet sous le nom « Aska3D ». Le concept de plaque à micro-miroirs, en tant que tel, étant connu, on ne le décrira pas davantage dans ce qui suit. L'enceinte formée par la source de lumière 8, la plaque à micro-miroirs 12 et une partie de l'élément de carrosserie 6 doit former une enceinte étanche à l'humidité, à la poussière et à la lumière, dans le sens ou la lumière naturelle ou la lumière provenant d'autres sources de lumières adjacentes ne doit pas pouvoir y pénétrer, et non réfléchissante, dans le but de ne pas perturber la génération et la projection de l'hologramme. Afin de rendre l'enceinte non réfléchissante, on peut utiliser de la peinture noire mate, du velours ou de la feutrine noire, ou bien tout type de peinture noire non-réfléchissante ou ultra-absorbante.

L'élément de carrosserie 6 comprend une peau 13 recouvrant la plaque à micro-miroirs 12 afin de la protéger de sollicitations mécaniques extérieures qui pourraient la détériorer. La peau 13 est réalisée dans un matériau transparent. On entend ici par « transparent » que le matériau est au moins transparent à tout rayonnement lumineux présentant une longueur d'onde comprise dans le spectre visible, c'est-à-dire comprise entre environ 380 et 780 nm, et dans l'infrarouge, c'est-à-dire comprise entre 700 et 20000 nm dans le cadre de l'invention. La peau 13 est ici réalisée dans un plastique présentant cette caractéristique, en l'occurrence du polycarbonate communément désigné « PC ». On peut toutefois prévoir de réaliser la peau dans un tout autre plastique présentant cette caractéristique, par exemple le polypropylène (PP) ou le polyméthacrylate de méthyle (PMMA). La peau 13 peut être semi-transparente afin de dissimuler la plaque à micro-miroirs 12 de la vue, et non-diffusante pour ne pas rendre l'hologramme trouble. On entend ici par « semi-transparente » que la peau 13 ne transmet qu'une partie de la lumière visible, par exemple à hauteur de 10% à 40%. Cette surface réduit la luminosité de l'hologramme 4 mais n'empêche pas sa génération. L'élément de carrosserie 6 comprend en outre une doublure structurelle 14 de manière à former, avec la peau 13, l'élément de carrosserie 6.

La pièce de véhicule 2 comprend au moins un filtre de confidentialité 15 ici positionné entre la plaque à micro-miroirs 12 et la peau 13. Dans l'espace entre ces deux éléments, le filtre de confidentialité 15 est situé en regard de la plaque à micro-miroirs 12, contre celle-ci ou à distance de celle-ci. Alternativement, le filtre de confidentialité 15 peut être situé en regard de l'autre surface de la plaque à micro-miroirs 12, contre celle-ci ou à distance de celle-ci, de sorte que cette dernière soit positionnée entre la peau 13 et le filtre de confidentialité 15.

Le filtre de confidentialité 15 se présente sous la forme d'une feuille de forme générale similaire à celle de la plaque à micro-miroirs 12, ici plane, qui couvre toute la surface de transmission ou de réflexion de la plaque à miroirs 12. A titre d'exemple de réalisation, le filtre de confidentialité peut permettre le passage de la lumière dans une plage angulaire de 60° d'amplitude centrée sur un axe perpendiculaire au filtre de confidentialité 15, ici compris dans le plan de coupe de la figure 2. On peut toutefois prévoir toute autre valeur pour cette plage angulaire, et cette plage angulaire peut se présenter en deux dimensions, à savoir sous la forme d'un secteur angulaire dans un plan, ou en trois dimensions, par exemple sous la forme d'un cône. Alternativement, un tel filtre peut être remplacé par une pluralité de filtres permettant, chacun, le passage de la lumière dans une plage angulaire plane chacune centrée sur un axe perpendiculaire au filtre de confidentialité, chacun des filtres étant positionné de sorte que les plages angulaires ne sont pas situées dans un même plan. Le filtre de confidentialité 15 fonctionne de la même manière qu'un filtre pour écran d'ordinateur et est donc connu en soi, de sorte qu'il ne sera pas décrit davantage en tant que tel dans ce qui suit.

Dans le cas où la peau 13 est semi-transparente, le filtre de confidentialité 15 peut être vu de l'extérieur du véhicule. Il est possible de prévoir de colorer et/ou de métalliser le filtre de confidentialité 15, en lui procurant un effet « miroir sans tain » afin de ne pas rompre l'aspect non-réfléchissant de l'enceinte mentionnée plus haut, afin qu'il participe à l'esthétique de la pièce de véhicule 2.

La pièce de véhicule 2 comprend un capteur 16, ici un capteur infrarouge. Le capteur 16 est couplé à l'UCE 11, porté par le support 10 et recouvert par la peau 13. La fonction du capteur 16 sera décrite plus loin.

Dans la figure 2, la pièce de véhicule 2 est à l'état désactivé, ce qui signifie que la source de lumière 8 est éteinte et qu'aucun hologramme n'est généré.

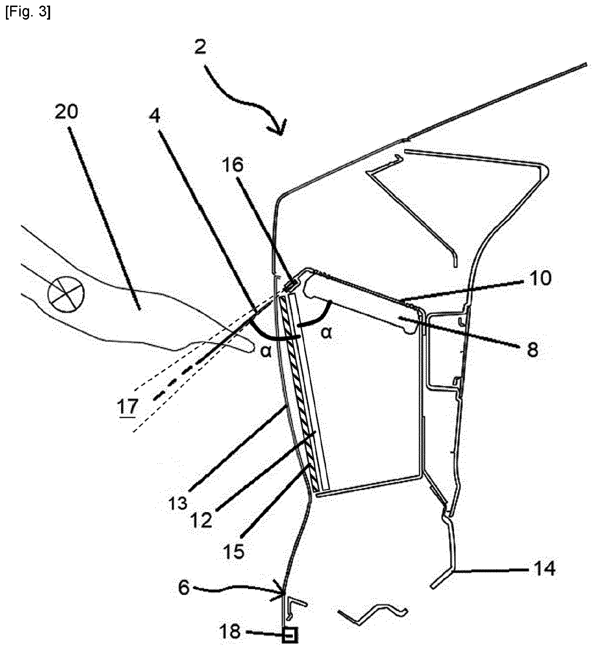

La figure 3 illustre la pièce de véhicule 2 lorsqu'elle est activée. Cette activation peut être commandée à l'aide d'un détecteur 18 apte à détecter l'approche d'une personne vers la pièce de véhicule 2 et sous certaines éventuelles conditions supplémentaires prédéterminées, par exemple la détection de la clé du véhicule. Ici, le détecteur 18 comprend un capteur de position fixé à l'extérieur de la pièce de véhicule 2. Lorsque le détecteur 18 détecte qu'une personne s'approche de la pièce de véhicule 2, il envoie un signal à l'UCE 11 en vue d'activer la source de lumière 8 et la plaque à micro-miroirs 12.

Dans l'état activé, la source de lumière 8 est allumée et génère une image lumineuse. Cette image lumineuse est émise en direction de la plaque à micro-miroirs 12 qui projette l'image lumineuse en dehors de la pièce de véhicule 2 de manière à générer l'hologramme 4. L'écran lumineux étant de forme générale plate, l'hologramme 4 a une forme plane. Le filtre de confidentialité 15 restreint la génération de l'hologramme 4 dans la plage angulaire prédéterminée présentée plus haut, ce qui permet d'empêcher la formation de parasites lumineux en périphérie de l'hologramme 4. La plaque à micro-miroirs 12 projette l'hologramme 4 de telle sorte que l'angle α entre l'écran lumineux et la plaque à micro-miroirs 12 est égal à l'angle entre la plaque à micro-miroirs 12 et le plan de l'hologramme 4. On comprend ainsi qu'en choisissant l'agencement de la source de lumière 8 par rapport à la plaque à micro-miroirs 12, on peut moduler l'inclinaison de l'hologramme 4 par rapport à la pièce de véhicule 2. Dans le cas présent, un angle α d'environ 50° est particulièrement commode pour que l'hologramme 4 soit bien visible et ait une position ergonomique.

Le capteur 16 est orienté de telle sorte qu'il peut détecter la présence de tout objet se trouvant dans une zone de détection 17, délimitée sur la figure 3 par deux traits pointillés, dans lequel est situé l'hologramme 4. Si l'UCE 11 attend une interaction de l'utilisateur 20 avec l'hologramme 4, il peut insérer dans l'image, et donc dans l'hologramme qui est projeté, un texte invitant l'utilisateur à interagir avec l'hologramme ainsi qu'au moins une zone dans lequel il peut interagir, par exemple un clavier. Lorsque l'utilisateur 20 traverse ladite zone avec son doigt comme illustré en figure 3, cela est détecté par le capteur 16 qui transmet ces informations à l'UCE 11 pour lui indiquer que l'utilisateur 20 a interagi avec l'hologramme 4. En d'autres termes, l'UCE 11 réagit à la position du doigt sur l'hologramme 4.

Un exemple d'application de ce système est l'affichage d'information. On peut citer comme informations l'état de chargement des batteries du véhicule, un diagnostic de l'état du véhicule, etc.

Un autre exemple d'application de ce système est le déverrouillage du véhicule. Lorsque l'utilisateur 20 s'approche du véhicule, la pièce de véhicule 2 rentre dans l'état activé, affiche un clavier dans l'hologramme 4 et invite l'utilisateur 20 à rentrer son code. Avec son doigt, il tape son code dans l'hologramme 4. Les touches du clavier de l'hologramme 4 actionnées par l'utilisateur 20 sont déterminées grâce au capteur 16. Si le code rentré est correct, l'UCE 11 émet une instruction de déverrouillage du véhicule. Dans le cas contraire, l'UCE 11 est programmé pour indiquer que le code rentré est incorrect puis pour réinviter l'utilisateur à taper son code. D'autres applications envisageables sont le déverrouillage d'une partie seulement du véhicule, par exemple d'une trappe d'accès à un compartiment du véhicule, l'allumage d'un signal lumineux, ou bien le lancement d'un programme de sortie de place de parking en mode autonome, pour ne citer que quelques exemples.

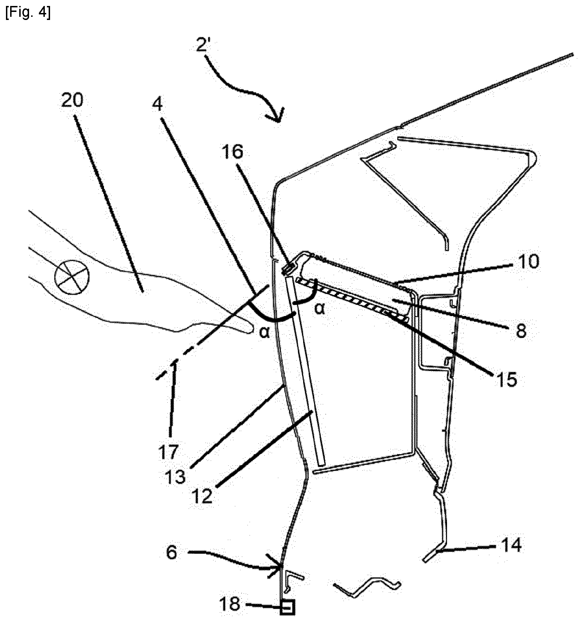

On a représenté en figure 4 une pièce de véhicule 2' selon un second mode de réalisation de l'invention. Le filtre de confidentialité 15 est ici plaqué contre la source de lumière 8, de sorte qu'il est positionné entre la source de lumière 8 et la plaque à micro-miroirs 12. Selon cette configuration, le filtre de confidentialité 15 diminue la luminosité de l'hologramme 4 par rapport à la configuration du premier mode de réalisation. Elle permet ainsi la génération d'un hologramme 4 plus discret. La projection de l'hologramme 4 et l'interaction avec celui-ci fonctionnent de la même manière que dans le mode de réalisation précédent. A titre de variante de réalisation, il est aussi possible de placer le filtre de confidentialité en regard de la source de lumière, tout en étant situé à distance de celle-ci.

L'invention n'est pas limitée aux modes de réalisation présentés et d'autres modes de réalisation apparaîtront clairement à l'homme du métier.

Il est possible de combiner les deux modes de réalisation décrits dans ce qui précède dans le cas où la pièce de véhicule comprend plusieurs filtres de confidentialité.

On peut utiliser tout type de source de lumière convenant pour générer l'hologramme, par exemple ceux listés ci-après : écran plat, écran incurvé, écran couplé avec une lentille d'agrandissement, vidéoprojecteur couplé avec un écran de projection, vidéoprojecteur à courte focale couplé avec un écran de projection, vidéoprojecteur couplé avec un écran de rétroprojection.

### Liste de références

2 : pièce de véhicule
4 : hologramme
6 : élément de carrosserie
8 : source de lumière
10 : support
11 : unité de commande électronique ou UCE
12 : plaque à micro-miroirs
13 : peau
14 : doublure structurelle
15 : filtre de confidentialité
16 : capteur
17 : zone de détection
18 : détecteur
20 : utilisateur

## Revendications

1. Pièce de véhicule (2 ; 2'), **caractérisée en ce qu'**elle comprend :
- une source de lumière (8) apte à émettre une image lumineuse,
- une plaque à micro-miroirs (12) apte à projeter l'image lumineuse en dehors de la pièce de véhicule (2 ; 2') sous la forme d'un hologramme (4),
- au moins un filtre de confidentialité (15) situé entre la source de lumière (8) et l'hologramme (4), et
- un capteur (16) apte à détecter la présence de tout objet dans un plan de projection (17) coïncidant au moins partiellement avec l'hologramme (4).

2. Pièce de véhicule (2 ; 2') selon la revendication précédente, dans laquelle la plaque à micro-miroirs (12) est recouverte par une peau (13) transparente à la lumière visible et à l'infrarouge.

3. Pièce de véhicule (2 ; 2') selon la revendication précédente, dans laquelle la peau (13) est réalisée en polycarbonate, en polypropylène ou en polyméthacrylate de méthyle.

4. Pièce de véhicule (2 ; 2') selon l'une quelconque des revendications précédentes, dans laquelle le capteur (16) est formé par un capteur infrarouge.

5. Pièce de véhicule (2 ; 2') selon l'une quelconque des revendications précédentes, formant un hayon, une porte, un pied avant, milieu ou arrière, un capot, un rétroviseur extérieur ou un pare-choc de véhicule.

6. Pièce de véhicule (2 ; 2') selon l'une quelconque des revendications précédentes, dans laquelle la source de lumière (8) comprend un écran lumineux.

7. Pièce de véhicule (2 ; 2') selon l'une quelconque des revendications précédentes, dans laquelle l'au moins un filtre de confidentialité (15) est coloré et/ou métallisé.

8. Pièce de véhicule (2 ; 2') selon l'une quelconque des revendications précédentes, comprenant plusieurs filtres de confidentialité (15).

9. Pièce de véhicule (2) selon l'une quelconque des revendications 1 à 8, dans laquelle l'au moins un filtre de confidentialité (15) est situé en regard de la plaque à micro-miroirs (12).

10. Pièce de véhicule (2) selon la revendication 9, dans laquelle l'au moins un filtre de confidentialité (15) est situé à distance de la plaque à micro-miroirs (12).

11. Pièce de véhicule selon la revendication 9, dans laquelle l'au moins un filtre de confidentialité (15) est en contact avec la plaque à micro-miroirs (12).

12. Pièce de véhicule (2') selon l'une quelconque des revendications 1 à 8, dans laquelle l'au moins un filtre de confidentialité (15) est situé en regard de la source de lumière (8).

13. Pièce de véhicule (2') selon la revendication 12, dans laquelle l'au moins un filtre de confidentialité (15) est situé à distance de la source de lumière (8).

14. Pièce de véhicule (2') selon la revendication 12, dans laquelle l'au moins un filtre de confidentialité (15) est en contact avec la source de lumière (8).
